# FASCICULE DE BREVET EUROPEEN

(11) **EP 1 521 101 B1**
(45) Date de publication et mention de la délivrance du brevet: **04.08.2010**
(21) Numéro de dépôt: 04292345.8
(22) Date de dépôt: 01.10.2004
(51) Int. Cl.: G01V 3/08, G01V 9/00

(54) **Detecteur d'objets non autorisés dans une zone à accès protégé**
Detektor von unerlaubten Gegenständen in einem Bereich mit geschütztem Zugang
Detector of unallowed objects in a zone with protected access

(30) Priorité: 02.10.2003 FR 0311575
(43) Date de publication de la demande: 06.04.2005
(73) Titulaire: Manneschi, Alessandro, 52100 Arezzo (IT)
(72) Inventeur: Manneschi, Alessandro, 52100 Arezzo (IT)
(74) Mandataire: Texier, Christian

(56) Documents cités:
- EP-A- 0 978 734
- EP-A- 1 411 373
- "The Magshoe Shoe Scanner"[Online] XP002289378 Extrait de l'Internet: URL:http://www.global-security-solutions.c om/MagShoeScanner.htm> [extrait le 2004-07-21]
- "Teen's Eagle Scout project used in O'Hare security" USA TODAY, [Online] 25 juillet 2003 (2003-07-25), XP002289377 CHICAGO, USA Extrait de l'Internet: URL:http://www.usatoday.com/travel/news/20 03/07/25-ord-scout.htm> [extrait le 2004-07-21]

## Description

La présente invention concerne le domaine des détecteurs conçus pour la détection d'objets non autorisés dans une zone à accès protégé.

La présente invention s'applique en particulier à la détection d'objets métalliques.

Il apparaît aujourd'hui nécessaire de contrôler avec une grande fiabilité les tentatives d'introduction ou de sortie d'objets non autorisés dans ou hors d'une zone sensible.

Le problème ainsi posé couvre un très large éventail de situations qui englobe notamment et non limitativement la détection de vols d'objets dans des magasins, entreprises ou entrepôts où la tentative d'introductions d'objets dangereux dans une zone protégée, telle qu'un magasin, une école, une gare, un organisme public voir privé.

De nombreux moyens ont déjà été proposés pour une telle détection.

En particulier, de nombreux détecteurs de métaux ont déjà été proposés.

On trouvera des exemples de détecteurs connus, notamment de détecteurs de métaux dans les documents FR-2720519, FR-2775350, FR-2780585, FR-2694098, FR-2697919, FR-2698178, FR-2698968, FR-2608286, FR-2610417, FR-2607937, FR-2608286, FR-2607937, US-6362739, US-6359582, US-6344818, US-6342696, US-6218830, US-5790685, US-5680103, US-5341126, WO03/032011, US-20010042412, WO98/12573, WO97/50000, WO97/42527, EP-0740822, EP-0490921, WO91/03746, US-5121105, WO88/07733, US-20030142853, US-20030128150, US-6507309, US-6507278, US-20020130804, US-6359582, US-6150810, US-6133829, US-5726628, US-5600303, US-5692029, US-5689184, US-5227800, US-5073782, US-5039981, US-4866439, US-4866424, US-4263551, US-4019053, US-4012690, US-3971983, US-3707672, US-4987767, US-5109691, US-4449115.

Plus précisément encore, il s'avère de nos jours que les individus qui tentent de sortir frauduleusement des objets hors d'une zone protégée, par exemple en cas de vol dans un magasin ou une entreprise, ou qui tente d'introduire un objet interdit, par exemple un élève qui tente d'introduire un objet dans une école, utilisent le plus souvent les chaussures et/ou chaussettes pour dissimuler les objets en question.

Ce phénomène semble dû essentiellement au fait que cette zone du corps humain est difficile à contrôler aisément visuellement ou par palpage manuel.

Par ailleurs, l'expérience révèle généralement des taux d'alarme, plus élevé au niveau des chaussures, avec les dispositifs classiques connus, que sur le reste du corps, en raison semble-t-il notamment de la présence quasi systématique d'un renfort métallique ou "cambrion" dans la semelle des chaussures.

Des tentatives ont certes été proposées pour développer des détecteurs dédiés spécifiquement à la détection d'objets interdits au niveau des chaussures d'un individu.

On trouvera des exemples de tels dispositifs dans les documents US-5039981, EP-0978734.

Le document « Teen's Eagle Scout project used in O'Hare security» USA TODAY, [Online] 25 juillet 2003 (2003-07-25), XP002289377 CHICAGO, USA Extrait de l'Internet : URL:http://www.usatoday.com/travel/news/2003/07/25-ordscout.htm>[extrait le 2004-07-21] décrit un dispositif détecteur de pièces métalliques sur la chaussure d'un individu, comprenant une embase support conçue pour recevoir sur sa surface supérieure un pied unique d'un individu revêtu de la chaussure et, à l'intérieur de l'embase support des moyens détecteurs de métaux.

Cependant, en pratique, aucun des dispositifs jusqu'ici proposés ne donne totalement satisfaction.

Ainsi sur certains sites sensibles est-on contraint aujourd'hui d'utiliser des appareils de contrôle à rayons X et pour cela d'inviter les personnes quittant le site ou accédant au site à enlever leurs chaussures puisque les dispositifs à rayons X ne peuvent pas être utilisés directement sur les chaussures encore aux pieds, car cela créerait un problème d'exposition de parties du corps humains aux radiations ionisantes.

La présente invention a par conséquent pour objectif de proposer de nouveaux moyens permettant d'améliorer la fiabilité de détection d'objets dans une zone à accès protégé.

Ce but est atteint dans le cadre de la présente invention, grâce à un dispositif défini en revendication 1 annexée.

Ainsi, comme on le précisera par la suite, l'invention se distingue de dispositifs antérieurs connus de la littérature précitée et/ou d'utilisations antérieures, par le fait que le dispositif est conçu pour opérer la détection sur un seul pied (chaussure) à la fois, et donc successivement sur les deux pieds (chaussures).

L'inventeur a en effet déterminé que les dispositifs proposés dans l'art antérieur souffrent d'un inconvénient majeur : ils opèrent la détection simultanément sur les deux pieds. Et dans ces conditions, l'interaction entre les matériaux des objets portés par les deux pieds ou chaussures perturbent la détection.

Selon une autre caractéristique avantageuse de la présente invention, l'embase support comporte un plateau en forme de marche qui comporte sur sa surface supérieure les moyens repères de positionnement.

Ces moyens repères de positionnement comprennent de préférence un dessin d'empreinte et de cadre autorisé, combiné avec une butée mécanique pour le talon de la chaussure.

Selon encore d'autres caractéristiques avantageuses de l'invention :
- le dispositif comporte un moyen qui délivre des messages visuels ou sonores guidant l'utilisateur au cours des étapes successives de la détection (mise en place, détection proprement dite, retrait et réitération pour le second pied),
- le dispositif comporte des moyens de tri aléatoire pour la désignation aléatoire d'individus dirigés vers un ou plusieurs test(s) complémentaire(s),
- le dispositif comporte des moyens de prélèvement de vapeurs ou traces de particules, par exemple de stupéfiants ou explosifs, et d'analyse de ces vapeurs ou traces.

Sur ce dernier point, il s'avère en effet de plus en plus crucial de détecter de manière précoce toute tentative d'introduction de stupéfiants dans des lieux tels que les écoles ou universités.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en perspective du bâti d'un dispositif conforme à la présente invention,
- la figure 2 représente une vue en plan d'un mode de réalisation préférentiel de moyens repères de positionnement proposés dans le cadre de la présente invention,
- la figure 3 représente une vue en perspective d'une variante de réalisation d'un bâti conforme à la présente invention équipé de moyens de détection de vapeur ou de trace de particules,
- la figure 4 représente schématiquement le positionnement d'une chaussure par rapport à des bobinages de détection,

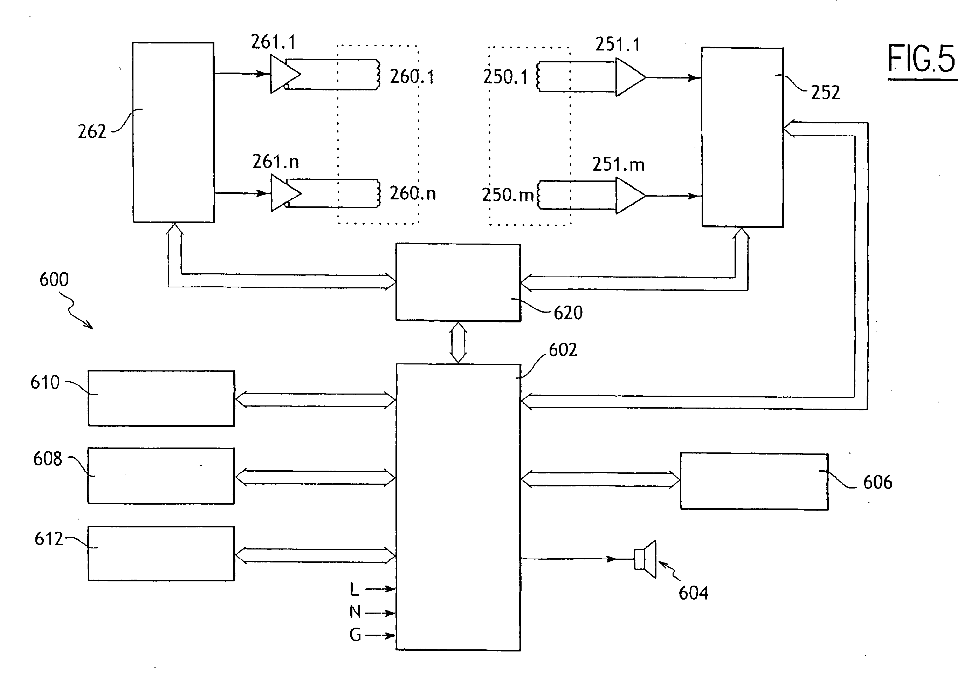

- la figure 5 représente sous forme de blocs fonctionnels le synoptique de fonctionnement d'un dispositif conforme à un mode de réalisation préférentiel de la présente invention,
- la figure 6 représente l'organigramme de fonctionnement de ce dispositif,
- la figure 7 représente un organigramme conforme à une variante de réalisation de la présente invention comportant une étape de tri aléatoire d'individus dirigés vers un ou plusieurs tests complémentaires,
- la figure 8 représente le synoptique, sous forme de blocs fonctionnels, d'un dispositif conforme à une variante de la présente invention comprenant des moyens de prélèvement et d'analyse de vapeur ou trace de particules de matériau, et
- la figure 9 représente un organigramme de fonctionnement de ce dispositif.

On va dans un premier temps décrire la structure générale de bâti d'appareils conformes à la présente invention illustrée sur les figures annexées.

Ce bâti 10 comprend de préférence :
- une embase support 100,
- deux panneaux latéraux symétriques 200, et
- un module d'informations 300.

L'embase support 100 a la géométrie d'un plateau rectangulaire en forme de marche. Sa surface supérieure 102 est plane.

Les dimensions de l'embase support 100 sont de préférence les suivantes :
- largeur comprise entre 450 et 700mm, typiquement de l'ordre de 575mm,
- profondeur comprise entre 500 et 900mm, typiquement de l'ordre de 670mm, et
- hauteur comprise entre 100 et 200mm, typiquement de l'ordre de 150mm.

Les deux panneaux latéraux verticaux 200 ont un contour globalement rectangulaire. Ils sont plans et parallèles entre eux. Les deux panneaux 200 font saillie vers le haut, au-dessus de l'embase 100, en position adjacente à ses côtés latéraux 103, 104. Les deux panneaux latéraux 200 forment ainsi en combinaison avec l'embase support sous-jacente 100, un canal susceptible d'accueillir le pied, équipé d'une chaussure, d'un utilisateur.

Les dimensions des panneaux 200 sont typiquement les suivantes :
- largeur correspondant à la profondeur de l'embase support 100,
- hauteur comprise entre 300 et 900mm, typiquement de l'ordre de 690mm.

Les panneaux latéraux verticaux 200 logent de préférence des bobinages en fils électriquement conducteurs destinés à la détection de métaux selon une méthode connue en soi.

La hauteur des panneaux 200 et des bobinages logés dans ceux-ci est adaptée pour permettre une détection fiable d'objets métalliques portés par un individu au niveau de sa chaussure, mais également au niveau de la jambe inférieure, c'est-à-dire mollet jusqu'au genou.

La structure en forme de marche proposée pour l'embase support 100, typiquement d'une hauteur de l'ordre de 150mm, précédemment décrite, est conçue de manière à ce que la personne examinée n'ait pas à monter sur un socle, avec le risque de chute et de gêne psychologique résultant de l'exposition à d'autres personnes aux alentours. En effet, l'utilisation d'une embase support 100 conçue pour accueillir un seul pied requiert seulement un acte du type acte initial de montée sur une échelle en mettant le pied dans une zone bien indiquée.

Par rapport à l'art antérieur, une telle structure à marche offre les avantages suivants :
- la préparation à monter une marche est un acte quotidien normal qui ne demande pas d'instruction particulière pour sa correcte exécution,
- cette même opération ne demande pas d'effort physique, même de la part d'une personne âgée ou d'une femme enceinte et en particulier, ne requiert pas un effort physique important, comme celui exigé par exemple pour monter une estrade,
- la structure en forme de marche permet d'éloigner du sol les antennes de génération et de réception de champs électromagnétiques constituées par les bobinages intégrés dans les panneaux latéraux 200, en réduisant ainsi les risques d'accouplement avec d'éventuelles structures métalliques intégrées dans ce sol,
- une telle structure permet de prévoir en mode naturel l'examen d'une seule chaussure à la fois, et
- permet une structure compacte par rapport à une estrade sur laquelle doit monter une personne complète, selon certains dispositifs connus de l'art antérieur.

Le module d'informations 300 comprend des moyens aptes à fournir des messages visuels et/ou sonores guidant l'utilisateur au cours de l'ensemble du processus de détection. De préférence, ce module 300 fournit successivement des messages ayant pour fonctions :
- de signaler que le dispositif est prêt pour la détection, par exemple le message "READY",
- d'inviter l'individu à placer son pied, sa chaussure, sur l'empreinte définie à cet effet, laquelle sera décrite plus en détail par la suite, par exemple sous forme du message "PLACE SHOE",
- de signaler à l'individu que la détection a été réalisée avec succès sans détection d'alarme et l'inviter, soit à réitérer avec la seconde chaussure, soit à se retirer, par exemple sous forme des messages "PASSED" ou "REMOVE".

Bien évidemment, les moyens 300 comprennent de préférence également les moyens de traitement aptes à exploiter les signaux électriques issus des bobinages logés dans les panneaux latéraux 200.

Les moyens détecteurs placés dans les panneaux latéraux 200 peuvent être constitués de bobinages émetteur et récepteur conformes à toute disposition appropriée, connus de l'homme de l'art.

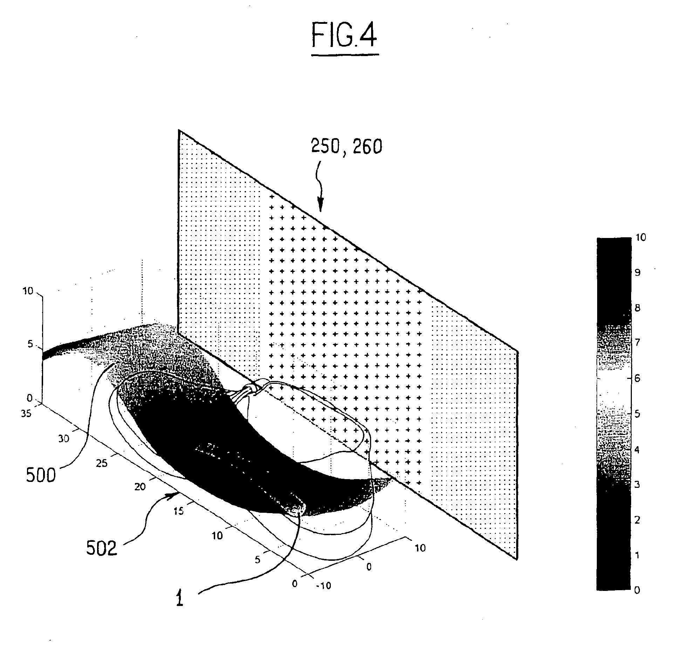

De tels bobinages sont schématisés sur la figure 4.

De tels moyens détecteurs à base de bobinages étant bien connus de l'homme de l'art, la géométrie des bobinages de ne sera pas décrite dans le détail par la suite.

On rappellera néanmoins, que de préférence, les bobinages comprennent, comme illustré par exemple sur la figure 4, plusieurs boucles en série de sens inversés permettant de neutraliser les effets de parasites externes ; que le dispositif comprend de préférence, tant au niveau de l'émission que de la réception des bobinages décalés entre eux ; et que de préférence, les bobinages sont alimentés par des signaux comprenant des composantes harmoniques complexes.

On va maintenant décrire la géométrie préférentielle des moyens formant repères de positionnement conformes à la présente invention prévus sur la surface supérieure 102 de l'embase support 100.

Ces moyens repères de positionnement portent la référence générale 400.

Ils comprennent de préférence, un dessin 410 combiné avec une butée 450.

Le dessin 410 comprend lui-même de préférence, trois éléments en combinaison : une ligne médiane 420, un cadre 430 et une empreinte 440.

La ligne médiane 420 s'étend parallèlement aux panneaux latéraux 200 à mi distance de ceux-ci. Elle est centrée sur le cadre 430 et de longueur préférentiellement limitée à celui-ci.

Le cadre 430 est de préférence un cadre rectangulaire comprenant deux grands côtés 432, 434 parallèles entre eux et parallèles à la ligne médiane 420, ainsi que parallèles aux panneaux latéraux 200 et deux petits côtés 436, 438 parallèles entre eux, perpendiculaires aux grands côtés 432, 434, et reliant ceux-ci.

Comme indiqué précédemment, les grands côtés 432, 434 ont de préférence une longueur identique à celle de la ligne médiane 420.

Les dimensions du cadre 430 sont de préférence les suivantes :
- largeur (soit longueur des petits côtés 436, 438) comprise entre 110 et 250mm, typiquement de l'ordre de 180mm,
- longueur (soit longueur des grands côtés 432, 434) de préférence comprise entre 300 et 500mm, typiquement de l'ordre de 400mm.

L'empreinte 440 est formée de préférence par la combinaison de deux parties d'ellipse 442, 444 dont les concavités sont dirigées, l'une vers l'autre et qui s'intersectent. Les deux parties d'ellipse ont des dimensions différentes : l'une 442 de faible extension est destinée à être placée sous le tarse, tandis que l'autre 444 de plus forte extension est destinée à être placée sous le métatarse. Les deux parties d'ellipse 442, 444, sont chacune symétriques par rapport à la ligne médiane 420. Le contour extérieur de la petite ellipse 444 est adjacent au petit côté 436 du cadre 430.

Les dimensions générales de l'empreinte 440 ainsi formées sont de préférence les suivantes :
- longueur ou encombrement maximale parallèlement à la ligne médiane 420 comprise entre 250 et 350mm, typiquement de l'ordre de 300mm, et
- encombrement en largeur, soit parallèlement aux petits côtés 436, 438, du cadre compris entre 100 et 180mm, typiquement de l'ordre de 136mm.

La butée 450 peut être formée de tout mode de réalisation approprié. Il s'agit de préférence d'une saillie légèrement incurvée prévue au niveau de la zone commune aux petits côtés 436 du cadre et à la partie arrière de l'empreinte 440, pour servir d'appui au talon de la chaussure.

L'empreinte 400 de positionnement peut être dessinée ou gravée sur le plan supérieur 102 de la marche 100. La butée 450 forme un sabot de référence, en relief, qui permet d'imposer la position du talon de la chaussure et permet ainsi un positionnement répétitif précis de la chaussure par rapport aux bobinages intégrés dans les panneaux latéraux 200. L'inventeur a en effet déterminé qu'un tel positionnement répétitif précis est indispensable pour une analyse fiable avec un rejet maximal des parties métalliques qui constituent normalement les chaussures (cambrion ou talon).

L'utilisation de panneaux 200 placés en position verticale contenant les antennes de génération et de réception du champ, similaires dans leur concept à un portique classique de détection de métaux offrent les avantages suivants.

En premier lieu, on notera que de tels panneaux verticaux 200 permettent d'étendre les antennes en hauteur de manière à garantir un signal utile et uniforme même si les objets à détecter, armes ou objets similaires interdits, de signal minimal, sont positionnés à la hauteur de la cheville ou au dessus de la cheville. Au contraire, les bobinages configurés selon un plan horizontal, conformes à certaines dispositions de l'état de la technique, par exemple dans le plan d'appui d'une estrade, n'offrent pas une telle possibilité, car la sensibilité d'interception se réduit fortement avec la distance des bobinages.

En second lieu, on notera que, selon l'invention les panneaux verticaux sont positionnés à une distance réciproque réduite (de préférence entre 450 et 700mm, typiquement de l'ordre de 575mm) réglée de manière à obtenir, simultanément, un bon signal de détection des objets recherchés et une certaine tolérance par rapport aux variations de positionnement transversales de la chaussure examinée.

Enfin, en troisième lieu, on notera que l'utilisation de bobinages et panneaux verticaux, et non pas de bobinages horizontaux, permet, de plus, de les désaccoupler fortement des masses métalliques présentent dans le sol. De cette manière on obtient, au niveau du dispositif, un comportement de détection constant et indépendant du lieu d'installation.

Selon une autre caractéristique avantageuse de l'invention, les bobinages de génération et de réception du champ électromagnétique sont positionnés de sorte que le champ magnétique de détection est modelé d'une façon optimale vis à vis des zones des chaussures qui présentent usuellement la plus grande quantité de métal. Plus précisément encore, de préférence, les bobinages sont ainsi positionnés en fonction du la zone de positionnement de la lame de renfort métallique horizontale ou "cambrion" prévue classiquement dans la semelle de chaussure. Cette solution permet l'obtention simultanée de l'interception d'objets frauduleux de signal minimal dans tout le volume recherché et une discrimination maximale possible vis à vis de parties métalliques normalement présentes dans les chaussures, spécialement celles de grande dimension.

On a représenté sur la figure 4, sous la référence 500, la courbe de sensibilité des bobinages récepteur 250 et émetteur 260 schématisés sur la figure 4. On notera que comme indiqué précédemment le champ magnétique de détection est opportunément modelé en 502 sur la position de l'élément métallique référencé 1 de renfort prévu dans la semelle de la chaussure et dénommé généralement "cambrion".

Plus précisément encore dans le cadre de la présente invention, le champ magnétique de détection est opportunément modelé à une distance comprise entre 10 et 20cm de la butée 450, typiquement à une distance de l'ordre de 15mm de cette butée.

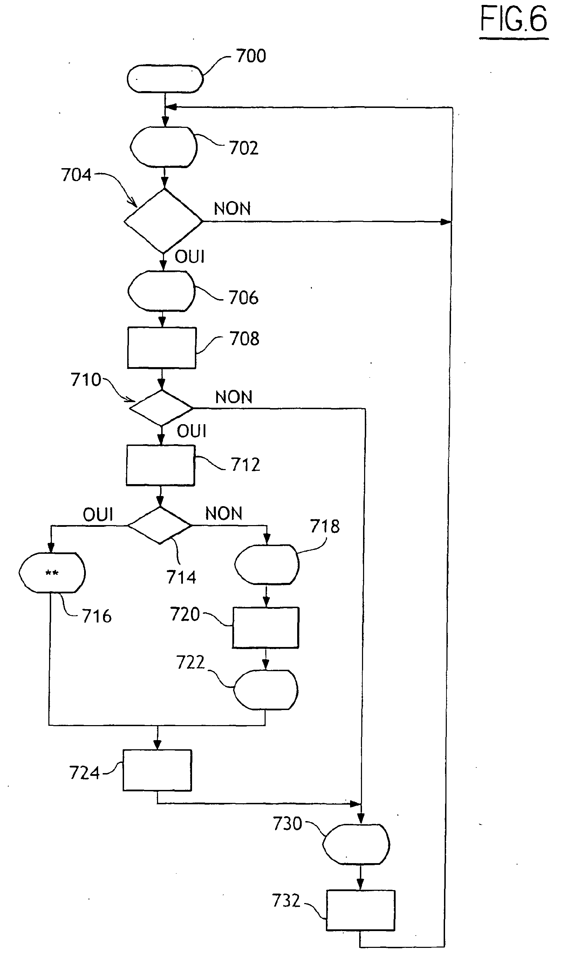

On va maintenant décrire la structure des moyens de traitement et d'information illustrés sur la figure 6. Ces moyens portant la référence générale 600 sont de préférence intégrés dans le module 300.

On aperçoit sur la figure 6 annexée, une unité centrale 602, laquelle comporte les moyens de mémorisation de programmes nécessaires et les moyens de traitement appropriés pour gérer l'ensemble des interfaces et exploiter les signaux recueillis.

L'unité centrale 602 communique avec :
- un moyen 604 générateur de signal acoustique d'alarme ou de messages vocaux,
- un moyen 606 de liaison avec un module extérieur, par exemple une interface type RS232,
- un moyen 608 d'introduction de données, par exemple un clavier,
- un module 610 d'affichage de caractères alpha numériques, pour la diffusion des signaux visuels de guidage précités, et de préférence,
- un module 612 de visualisation verticale de la zone de détection d'un objet interdit.

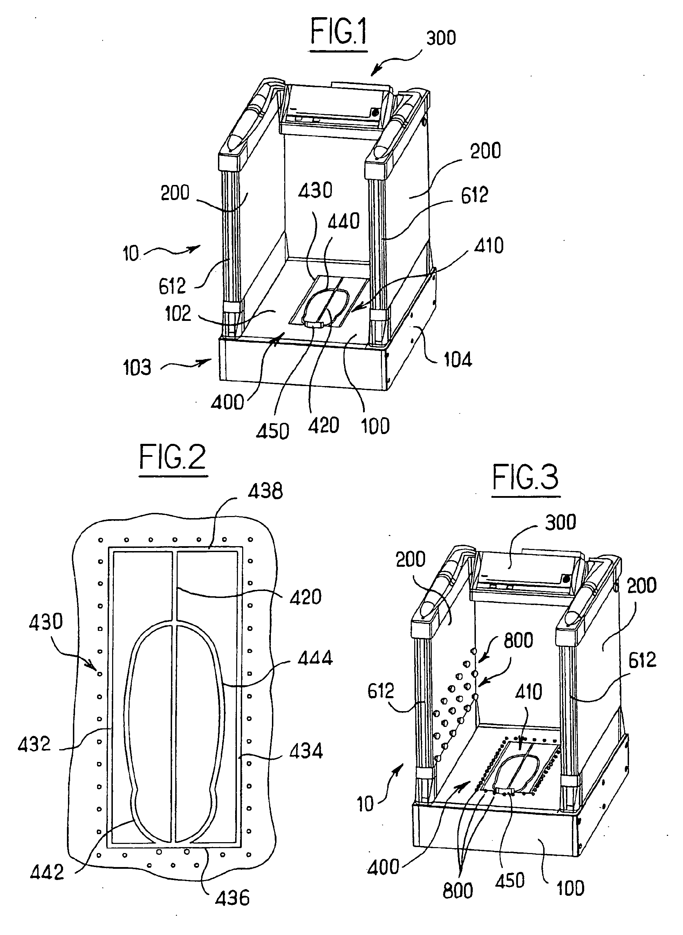

De préférence, ces moyens d'affichage 612 sont matérialisés par deux barrettes d'affichage disposées sur l'arête verticale avant des panneaux latéraux 200 comme on le voit sur la figure 1. Chacune de ces barrettes 612 est scindée en une pluralité de dispositifs d'affichage ponctuel, alimentés sélectivement, lors de la détection d'un objet déterminé, à la hauteur de la détection.

La fourniture d'une telle information permet aux intervenants extérieurs de connaître immédiatement la hauteur de détection de l'objet sur l'individu contrôlé et permet ainsi une intervention rapide.

L'unité centrale 602 représentée sur la figure 6 annexée est également en communication avec une base de temps 620 laquelle contrôle, d'une part l'alimentation des bobinages émetteurs, et d'autre part, en synchronisme la détection de signaux provenant des bobinages récepteurs.

Sur la figure 6, on a ainsi représenté sous la référence 260.1, 260.n, des bobinages émetteurs indépendants alimentés respectivement par des circuits pilotes 261.1, 261.n, eux-mêmes reliés à un générateur de signaux d'excitation 262 piloté par la base de temps 120. Sur la même figure 6, on a représenté sous les références 250.1, 250.m , des bobinages récepteurs indépendants reliés à des circuits amplificateurs respectifs 251.1, 251.m , reliés à un circuit 252 de mise en forme de signaux de réception issus des amplificateurs 251.1, 251.m . Le circuit 252 est cadencé par la base de temps 620 et relié à l'unité centrale 602.

Bien entendu le nombre de bobinages émetteurs 260 et le nombre de bobinages récepteurs 250 n'est pas limité à deux. Par ailleurs, le nombre de bobinages émetteurs 260 n'est pas nécessairement identique au nombre de bobinages récepteurs 250.

Le fonctionnement d'un tel circuit, connu en soi de l'homme de l'art, ne sera pas décrit plus en détail par la suite.

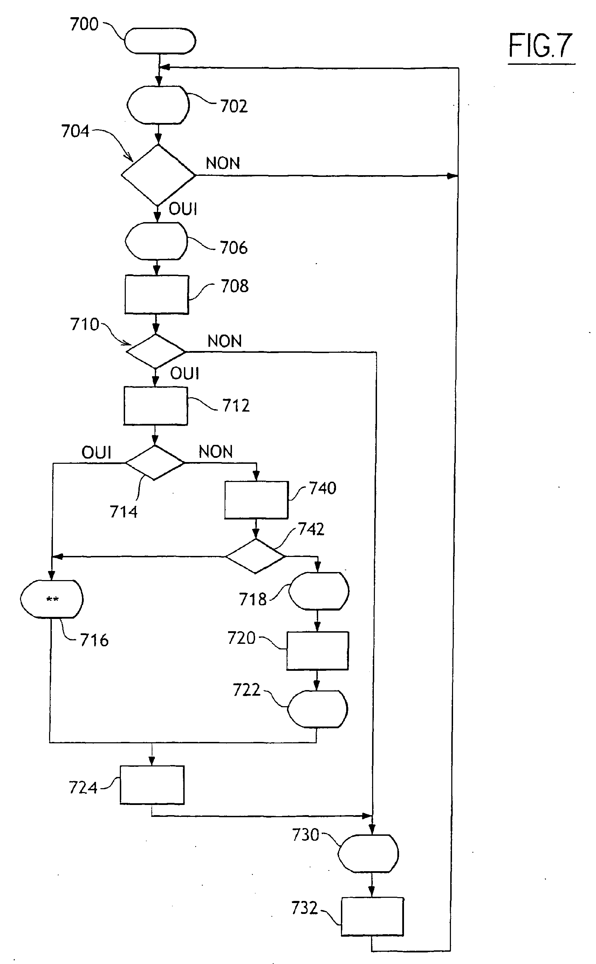

On va maintenant décrire en regard de la figure 7, l'organigramme de fonctionnement général d'un tel dispositif.

Sur la figure 7, l'étape 700 est une étape d'initialisation.

L'étape 702 est une étape de visualisation d'un signal, par exemple "READY" indiquant que l'appareil est prêt pour une mesure.

A l'étape 704, l'unité centrale 602 examine, par tout traitement approprié (l'exploitation des signaux issus des bobinages récepteurs 250 ou le signal issu d'un détecteur auxiliaire, par exemple un détecteur optique) si une chaussure est présente dans le champ de détection.

Dans la négative, l'étape 702 est réitérée.

Au contraire dans l'affirmative, l'étape 704 est suivie de l'étape 706 au cours de laquelle l'unité centrale 602 impose sur le dispositif d'affichage 610 la visualisation d'une information invitant l'individu contrôlé à placer sa chaussure sur l'empreinte 400, par exemple à l'aide du signal "PLACE SHOE".

L'étape 708 consécutive est une étape de temporisation laissant à l'individu le temps de placer correctement la chaussure sur l'empreinte 400 ou de retirer la chaussure, suite à un contrôle antérieur. Au cours de l'étape 710 consécutive, l'unité centrale examine si une chaussure est correctement positionnée sur l'empreinte 400.

Dans la négative, l'étape 710 est suivie d'une étape 730 de remise à zéro du dispositif et de visualisation d'un signal en conséquence sur l'afficheur 610, par exemple "RESET".

Au contraire dans l'affirmative, l'étape 710 est suivie d'une étape 712 au cours de laquelle l'unité centrale 602 opère l'analyse proprement dite des signaux issus des bobinages récepteurs 250.

Après cette étape 712, l'unité centrale 602 procède au cours d'une étape 714 à l'analyse du résultat du traitement des signaux pour déterminer si celui-ci doit conduire ou non à une alarme.

Dans l'affirmative, l'étape 714 est suivie d'une étape 716 au cours de laquelle un signal sonore est émis sur le moyen 604 et/ou un signal visuel approprié est émis sur l'afficheur 610.

Au contraire dans la négative, l'étape 714 est suivie d'une étape 718 indiquant à l'individu contrôlé et au personnel de contrôle qu'aucun objet frauduleux n'a été détecté, par exemple sous forme du signal "PASSED".

Cette étape de visualisation 718 est suivie d'une étape de temporisation 720, puis d'une étape 722 au cours de laquelle l'unité centrale 602 commande la visualisation sur l'afficheur 610 d'un message invitant l'individu contrôlé à retirer sa chaussure, par exemple sous forme du signal "REMOVE".

Les étapes 716 et 722 sont suivies d'une étape de temporisation 724 destinées à permettre à l'individu contrôlé de retirer correctement sa chaussure.

L'étape 724 est suivie de l'étape 730 précitée.

Cette dernière est elle-même suivie d'une étape de temporisation 732 destinée à permettre une stabilisation du signal. Puis l'étape 732 est rebouclée en amont de l'étape de visualisation 702 précitée.

Comme on l'a évoqué précédemment, de préférence, le dispositif conforme à la présente invention comprend des moyens de tri aléatoire pour la désignation aléatoire d'individus dirigés vers un ou plusieurs tests complémentaires. Le ou les tests complémentaires peuvent consister par exemple en un palpage manuel ou en un dispositif d'analyse automatique, par exemples les prélèvements et l'analyse de vapeur ou de trace de particules, par exemple de stupéfiants ou explosif.

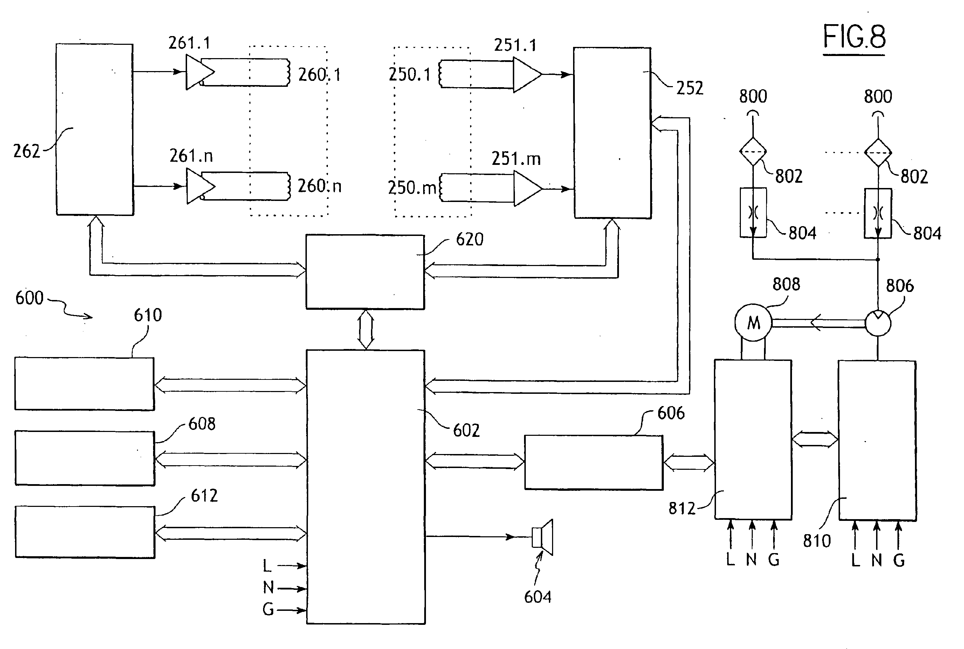

L'organigramme de fonctionnement d'un tel dispositif comprenant un tri aléatoire de désignation est illustré sur la figure 8.

On retrouve sur celle-ci l'ensemble des étapes précédemment décrites en regard de la figure 7. Celles-ci ne seront donc pas décrites par la suite. On notera cependant que l'organigramme représenté sur la figure 8 spécifique du dispositif comprenant un moyen de tri aléatoire pour une désignation comprend deux étapes additionnelles 740, 742 intercalées entre l'étape 714 et les étapes de visualisation 716, 718.

En cas de détection d'alarme à l'étape 714, celle-ci est toujours suivie de l'étape de visualisation 716.

Par contre, en cas de non détection d'alarme à l'étape 714, celle-ci est suivie de l'étape 714 de calcul aléatoire de sélection. Puis, à l'étape 742, l'unité centrale 602 détermine si oui ou non l'individu en cours de contrôle a été ainsi aléatoirement sélectionné. Dans l'affirmative, l'étape 742 est suivie de l'étape de visualisation 716. Dans la négative l'étape 742 est suivie de l'étape de visualisation conduisant à une autorisation 718.

Comme on l'a indiqué précédemment, le dispositif conforme à la présente invention peut être complété par des moyens d'aspiration de vapeur et/ou de traces de matière sensible, par exemple stupéfiant voire explosif provenant éventuellement des chaussures. De tels moyens d'aspiration sont de préférence intégrés dans les panneaux latéraux 200 et dans l'embase support 100 formant marche. On a ainsi illustré sur la figure 3, une variante de réalisation du dispositif selon laquelle les panneaux latéraux 200 et l'embase support 100 comportent une pluralité de buses d'aspiration 800.

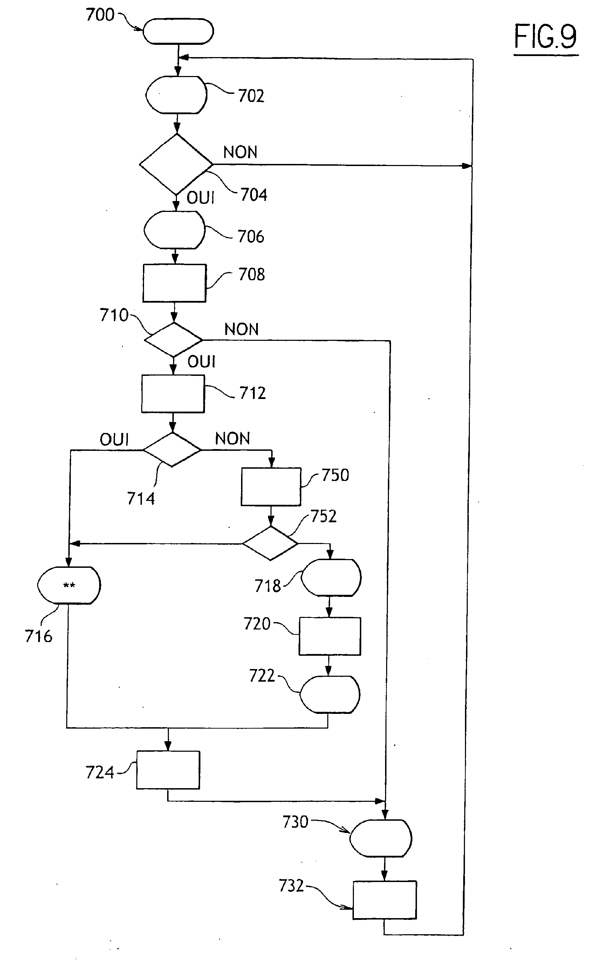

On a représenté schématiquement sur la figure 9 annexée, la structure d'un dispositif complet conforme à la présente invention intégrant de tels moyens de prélèvement et les moyens de traitement associés. Comme on le voit sur la figure 9 de préférence, les buses 800 sont suivies de filtres 802 et de moyens de contrôle de flux 804. Ces derniers sont eux-mêmes reliés à l'entrée d'une pompe 806 actionnée par un moteur 808. La sortie de la pompe 806 est reliée à un détecteur approprié 810, par exemple du type spectromètre de masse. Le détecteur 810 et le moteur 808 sont reliés et pilotés par une unité de traitement 812, elle-même reliée, par exemple par l'interface 606 et tout moyen approprié à l'unité centrale générale 602.

Pour le reste, les moyens représentés sur la figure 9 sont conformes aux moyens précédemment décrits en regard de la figure 6. Ceux-ci ne seront donc pas décrits à nouveau par la suite.

Un exemple d'organigramme de fonctionnement d'un tel dispositif est schématisé sur la figure 10. On y retrouve des étapes similaires à celles précédemment décrites en regard de la figure 7 pour la structure de base, complétées par deux étapes 750, 752 intercalées entre l'étape de détection d'alarme 714 par détection d'un objet métallique et les étapes de visualisation 716 ou 718. L'étape 750 qui suit l'étape 714 en cas de non détection d'un objet métallique correspond à l'étape de prélèvement et d'analyse des vapeurs et/ou traces de matériaux recherchés, par exemple de stupéfiants. L'étape 752 est une étape de test. En cas de détection d'une telle substance elle est suivie de l'étape de visualisation d'alarme 716 précitée. Au contraire en cas de non détection de substance interdite, l'étape de test 752 est suivie de l'étape de visualisation d'un signal d'autorisation à l'étape 718.

Le système d'analyse 810 précité peut être placé en tout lieu approprié du dispositif, de préférence à l'intérieur de l'embase support 100.

Selon une variante de réalisation, les buses 800 peuvent être remplacées directement par des capteurs monolithiques spécialisés, connectés électriquement à l'unité de traitement 812.

Par rapport à l'art antérieur, la présente invention offre en particulier les avantages suivants :
- une sécurité de contrôle élevée et homogène,
- une grande fluidité de passage sans exiger de personnel de contrôle spécialisé,
- l'élimination des coûts de personnel spécialisé dédié dans certaines applications connues à un contrôle manuel des chaussures,
- l'argumentation du confort pour le public par l'élimination de la gêne causée par l'enlèvement / la remise des chaussures et par la perte de temps associée à une telle opération,
- l'élimination de la nécessité d'appareils à rayons X requis dans certaines applications connues pour un examen,
- le dispositif est léger et peu volumineux donc aisément déplaçable et adaptable sur tout site.
- l'analyse des chaussures n'est pas effectuée en mode différentiel, comme cela est le cas dans certains appareils connus, mais de manière absolue chaussure par chaussure. Ainsi chaque chaussure est évaluée séparément et la détection de la cible métallique la plus critique, c'est-à-dire celle de signal minimal, effectuée indépendamment de la comparaison avec l'autre. L'inventeur a déterminé que cette disposition permet, bien que la quantité complète de métal présente dans une simple chaussure, soit supérieure, dans beaucoup de cas, au poids de la cible métallique de signal minimal, de garantir la sécurité d'interception des cibles de signal minimal dans toutes les conditions de transport.
- l'analyse des chaussures ne se limite pas à la partie basse de ces dernières ou aux parties immédiatement adjacentes mais, en utilisant un champ magnétique de mesure hautement uniforme et structuré, couvre la jambe jusqu'à la hauteur du mollet, sans variation de sensibilité et donc sans dégradation des prestations. Ceci garantit la sûreté également dans le cas de cibles de signal minimal transportées à la cheville ou au dessus de celle-ci.
- le système conforme à l'invention d'exploration des chaussures examinées et l'analyse associée permettent de détecter les cibles critiques, de signal minimal, en discriminant en même temps, les signaux parasites des nombreuses masses métalliques présentes dans les chaussures, même de poids supérieur à la cible à détecter. En conséquence, l'attention des opérateurs dédiés au contrôle est focalisée sur un nombre limité de cas, avec un avantage pour la sûreté.
- une influence nulle ou négligeable des structures métalliques enterrées ou présentes au niveau du sol d'appui, par exemple renforts du sol en béton armé ou lames métalliques, souvent enterrées à quelques centimètres sous la superficie du sol. Ceci grâce au désaccouplement élevé par rapport à de telles masses métalliques.
- au niveau de l'ergonomie, l'appareil est simple et confortable. Il ne contraint pas la personne examinée à avoir des comportements étranges ou à prendre des positions embarrassantes. Le temps d'analyse peut être réduit au minimum.
- l'utilisation d'une embase support en forme de marche (associée à des moyens repères de positionnement) garantit la détection sur une chaussure unique, la seconde chaussure qui repose sur le sol étant maintenue en dehors du champ de détection.

Bien entendu la présente invention n'est pas limitée aux modes de réalisation particuliers qui viennent d'être décrits mais s'étend à toute variante conforme à son esprit.

Elle n'est pas non plus limitée à une application particulière et peut s'appliquer à toute zone sensible telle que école, gare, entreprise privée ou publique, stade, salle de spectacle, enceinte de manifestation, etc...

Selon une variante de réalisation, la butée 450 pour le talon peut être omise. Dans ce cas cependant, il est alors préférable de prévoir plusieurs bobinages décalés longitudinalement, c'est-à-dire parallèlement à la ligne médiane 420, pour optimiser la détection retenant le signal le plus faible issu de ces bobinages afin de s'affranchir au mieux de l'influence des masses métalliques traditionnellement prévues dans une chaussure.

## Revendications

1. Dispositif détecteur d'objet non autorisé dans une zone à accès protégé, comprenant en combinaison :
- une embase support (100) conçue pour recevoir un pied unique, revêtu de sa chaussure, d'un individu à contrôler,
- des moyens détecteurs (250, 260, 800, 810) adaptés pour la détection d'un matériau cible, liés à l'embase support (100), et
- des moyens repères (400) de positionnement, sur l'embase support (100), aptes à imposer un positionnement précis du pied de l'individu à contrôler par rapport aux moyens détecteurs,
**caractérisé par le fait qu'**il comprend deux panneaux verticaux (200) en saillie sur l'embase support (100) qui logent des bobinages émetteurs (260) et récepteurs (250).

2. Dispositif selon la revendication 1, **caractérisé par le fait que** l'embase support (100) comporte un plateau en forme de marche qui comporte sur sa surface supérieure (102) les moyens repères de positionnement (400).

3. Dispositif selon l'une des revendications 1 ou 2, **caractérisé par le fait que** la hauteur de l'embase support (100) est comprise entre 100 et 200mm, et très préférentiellement de l'ordre de 150mm.

4. Dispositif selon l'une des revendications 1 à 3, **caractérisé par le fait que** la largeur de l'embase support (100) est comprise entre 450 et 700mm, et très préférentiellement de l'ordre de 575mm.

5. Dispositif selon l'une des revendications 1 à 4, **caractérisé par le fait que** la profondeur de l'embase support (100) est comprise entre 500 et 900mm, et très préférentiellement de l'ordre de 670mm.

6. Dispositif selon l'une des revendications 1 à 5, **caractérisé par le fait que** les moyens repères de positionnement (400) comprennent un dessin d'empreinte (410).

7. Dispositif selon la revendication 6, **caractérisé par le fait que** le dessin d'empreinte (410) comporte un cadre, de préférence rectangulaire.

8. Dispositif selon la revendication 7, **caractérisé par le fait que** le cadre à une longueur comprise entre 300 et 500mm, de préférence de l'ordre de 400mm et une largeur comprise entre 110 et 250mm, de préférence de l'ordre de 180mm.

9. Dispositif selon l'une des revendications 6 à 8, **caractérisé par le fait que** le dessin d'empreinte (410) comporte une ligne médiane (420).

10. Dispositif selon l'une des revendications 6 à 9, **caractérisé par le fait que** le dessin d'empreinte (410) comprend une empreinte (440) formée de deux ellipses (442, 444) adjacentes.

11. Dispositif selon la revendication 10, **caractérisé par le fait que** la longueur de l'empreinte (440) est comprise entre 250 et 350mm, de préférence de l'ordre de 300mm et sa largeur comprise entre 100 et 180mm.

12. Dispositif selon l'une des revendications 6 à 11, **caractérisé par le fait que** les moyens repères de positionnement (400) comprennent une butée mécanique (450).

13. Dispositif selon la revendication 12, **caractérisé par le fait que** la butée mécanique (450) est adaptée pour servir de butée pour le talon d'une chaussure.

14. Dispositif selon l'une des revendications 1 à 13, **caractérisé par le fait que** les moyens détecteurs comprennent des bobinages émetteurs et des bobinages récepteurs (250, 260) adaptés pour la détection d'objets métalliques.

15. Dispositif selon l'une des revendications 1 à 14, **caractérisé par le fait que** le champ magnétique de détection est modelé d'une façon optimale vis à vis des zones de la chaussure présentant usuellement la plus grande quantité de métal.

16. Dispositif selon l'une des revendications 14 ou 15, **caractérisé par le fait que** le champ de détection des moyens détecteurs (250, 260) est opportunément modelé à une distance du talon de la chaussure comprise entre 10 et 20cm, de préférence de l'ordre de 15cm.

17. Dispositif selon l'une des revendications 14 à 16, **caractérisé par le fait que** le champ magnétique de détection des moyens détecteurs (250, 260) est opportunément modelé à une distance d'une butée mécanique (450) comprise entre 10 et 20cm, de préférence de l'ordre de 15cm.

18. Dispositif selon l'une des revendications 1 à 17, **caractérisé par le fait qu'**il comporte un moyen (300) qui délivre des messages visuels ou sonores guidant l'utilisateur au cours des étapes successives de la détection.

19. Dispositif selon l'une des revendications 1 à 18, **caractérisé par le fait qu'**il comporte des moyens (740) de tri aléatoire pour la désignation aléatoire d'individus dirigés vers un ou plusieurs test(s) complémentaire(s).

20. Dispositif selon l'une des revendications 1 à 19, **caractérisé par le fait qu'**il comporte des moyens (800) de prélèvement de vapeurs ou traces de particules, par exemple de stupéfiants ou explosifs, et d'analyse de ces vapeurs ou traces.

21. Dispositif selon la revendication 20, **caractérisé par le fait que** les moyens de prélèvement comprennent des buses d'aspiration (800) sur l'embase support (100).

22. Dispositif selon l'une des revendications 1 à 21, **caractérisé par le fait que** les panneaux verticaux (200) possèdent des buses d'aspiration (800) pour le prélèvement de vapeurs ou traces de particules.

23. Dispositif selon l'une des revendications 1 à 22, **caractérisé par le fait que** la hauteur des panneaux verticaux (200) est adaptée pour la détection d'objets jusqu'à la hauteur du genou d'un individu contrôlé.

24. Dispositif selon l'une des revendications 1 à 23, **caractérisé par le fait que** la hauteur des panneaux verticaux (200) est comprise entre 300 et 900mm.

25. Dispositif selon l'une des revendications 1 à 24, **caractérisé par le fait qu'**il comprend plusieurs bobinages décalés en hauteur.

26. Dispositif selon l'une des revendications 1 à 25, **caractérisé par le fait qu'**il comprend plusieurs bobinages décalés horizontalement.

27. Dispositif selon l'une des revendications 1 à 26, **caractérisé par le fait que** l'un au moins des panneaux verticaux comporte des moyens (612) permettant de visualiser la hauteur de détection d'un objet non autorisé.

## Claims

1. A device for detecting a non-authorized object in a zone with protected access, the device comprising in combination:
a supporting base (100) designed to receive a single foot wearing a shoe, of an individual to be inspected;
• detector means (250, 260, 800, 810) adapted to detect a target material and associated with the support base (100); and
• position-identifying means (400) on the support base (100) suitable for imposing accurate positioning of the foot of the individual being inspected relative to the detector means;
the device being **characterized by** the fact that it includes two vertical panels (200) projecting from the supporting base (100) and housing transmitter coils (260) and receiver coils (250).

2. A device according to claim 1, **characterized by** the fact that the supporting base (100) comprises a block in the form of a step with the position-identifying means (400) on its top surface (102).

3. A device according to claim 1 or claim 2, **characterized by** the fact that the height of the supporting base (100) lies in the range 100 mm to 200 mm, and most preferably is about 150 mm.

4. A device according to any one of claims 1 to 3, **characterized by** the fact that the width of the supporting base (100) lies in the range 450 mm to 700 mm, and most preferably is about 575 mm.

5. A device according to any one of claims 1 to 4, **characterized by** the fact that the step of the supporting base (100) lies in the range 500 mm to 900 mm, and most preferably is about 670 mm.

6. A device according to any one of claims 1 to 5, **characterized by** the fact that the position-identifying means (400) comprise a drawing of a footprint (410).

7. A device according to claim 6, **characterized by** the fact that the drawing of a footprint (410) includes a preferably rectangular frame.

8. A device according to claim 7, **characterized by** the fact that the length of the frame lies in the range 300 mm to 500 mm, and is preferably about 400 mm, and the width of the frame lies in the range 110 mm to 250 mm, and is preferably about 180 mm.

9. A device according to any one of claims 6 to 8, **characterized by** the fact that the drawing of a footprint (410) includes a middle line (420).

10. A device according to any one of claims 6 to 9, **characterized by** the fact that the drawing of a footprint (410) includes a footprint (440) built up from two adjacent ellipses (442, 444).

11. A device according to claim 10, **characterized by** the fact that the length of the footprint (440) lies in the range 250 mm to 350 mm, and is preferably about 300 mm, and its width lies in the range 100 mm to 180 mm.

12. A device according to any one of claims 6 to 11, **characterized by** the fact that the position-identifying means (400) include a mechanical abutment (450).

13. A device according to claim 12, **characterized by** the fact that the mechanical abutment (450) is adapted to act as an abutment for the heel of a shoe.

14. A device according to any one of claims 1 to 13, **characterized by** the fact that the detector means comprise transmitter coils and receiver coils (250, 260) adapted to detecting metal objects.

15. A device according to any one of claims 1 to 14, **characterized by** the fact that the detection magnetic field is modeled in optimum manner relative to those zones of a shoe that usually present the greatest quantity of metal.

16. A device according to claim 14 or claim 15, **characterized by** the fact that the detection field of the detector means (250, 260) is advantageously shaped at a distance from the heel of the shoe that lies in the range 10 cm to 20 cm, and is preferably about 15 cm.

17. A device according to any one of claims 14 to 16, **characterized by** the fact that the detection magnetic field of the detector means (250, 260) is advantageously shaped at a distance from a mechanical abutment (450) that lies in the range 10 cm to 20 cm, and preferably is about 15 cm.

18. A device according to any one of claims 1 to 17, **characterized by** the fact that it includes means (300) delivering visible or audible messages guiding the user during the successive detection steps.

19. A device according to any one of claims 1 to 18, **characterized by** the fact that it includes means (740) for randomly drawing lots to designate individuals randomly for undergoing one or more additional tests.

20. A device according to any one of claims 1 to 19, **characterized by** the fact that it includes means (800) for picking up vapors or traces of particles, e.g. of drugs or explosives, and for analyzing said vapors or traces.

21. A device according to claim 20, **characterized by** the fact that the means for picking up vapors or traces comprise suction nozzles (800) on the supporting base (100).

22. A device according to any one of claims 1 to 21, **characterized by** the fact that the vertical planes (200) possesses suction nozzles (800) for picking up vapors or traces of particles.

23. A device according to any one of claims 1 to 22, **characterized by** the fact that the height of the vertical panels (200) is adapted to detecting objects up to knee height on an individual being inspected.

24. A device according to any one of claims 1 to 23, **characterized by** the fact that the height of the vertical panels (200) lies in the range 300 mm to 900 mm.

25. A device according to any one of claims 1 to 24, **characterized by** the fact that it includes a plurality of coils that are offset vertically.

26. A device according to any one of claims 1 to 25, **characterized by** the fact that it includes a plurality of coils that are offset horizontally.

27. A device according to any one of claims 1 to 26, **characterized by** the fact that at least one of the vertical panels includes means (612) for displaying the height at which a prohibited object has been detected.

## Patentansprüche

1. Vorrichtung zur Erkennung eines nicht zugelassenen Gegenstands in einem Bereich mit geschütztem Zugang, umfassend in Kombination:
- eine Auflagefläche (100), entworfen, um einen einzigen Fuß, bedeckt von seinem Schuh, einer zu kontrollierenden Person aufzunehmen,
- Erkennungsmittel (250, 260, 800, 810), angepasst für die Erkennung eines Zielmaterials, verbunden mit der Auflagefläche (100), und
- Markierungsmittel (400) zur Positionierung auf der Auflagefläche (100), die geeignet sind, eine genaue Positionierung des Fußes der zu kontrollierenden Person bezüglich der Erkennungsmittel zu veranlassen, **dadurch gekennzeichnet, dass** sie zwei vertikale Tafeln (200) umfassen, die aus der Auflagefläche (100) herausragen, die Sender- und Empfängerwicklungen (260) aufnehmen.

2. Vorrichtung nach Anspruch 1, **dadurch gekennzeichnet, dass** die Auflagefläche (100) eine Plattform in Form einer Stufe umfasst, die auf ihrer oberen Fläche (102) die Markierungsmittel zur Positionierung (400) umfasst.

3. Vorrichtung nach einem der Ansprüche 1 oder 2, **dadurch gekennzeichnet, dass** die Höhe der Auflagefläche (100) zwischen 100 und 200 mm liegt und besonders vorzugsweise im Bereich von 150 mm.

4. Vorrichtung nach einem der Ansprüche 1 bis 3, **dadurch gekennzeichnet, dass** die Länge der Auflagefläche (100) zwischen 450 und 700 mm liegt und besonders vorzugsweise im Bereich von 575 mm.

5. Vorrichtung nach einem der Ansprüche 1 bis 4, **dadurch gekennzeichnet, dass** die Tiefe der Auflagefläche (100) zwischen 500 und 900 mm liegt und besonders vorzugsweise im Bereich von 670 mm.

6. Vorrichtung nach einem der Ansprüche 1 bis 5, **dadurch gekennzeichnet, dass** die Markierungsmittel zur Positionierung (400) ein Druckmuster (410) umfassen.

7. Vorrichtung nach Anspruch 6, **dadurch gekennzeichnet, dass** das Druckmuster (410) einen Rahmen, vorzugsweise rechtwinklig, umfasst.

8. Vorrichtung nach Anspruch 7, **dadurch gekennzeichnet, dass** der Rahmen eine Länge zwischen 300 und 500 mm, vorzugsweise im Bereich von 400 mm, und eine Breite zwischen 110 und 250 mm, vorzugsweise im Bereich von 180 mm aufweist.

9. Vorrichtung nach einem der Ansprüche 6 bis 8, **dadurch gekennzeichnet, dass** das Druckmuster (410) eine Mittellinie (420) umfasst.

10. Vorrichtung nach einem der Ansprüche 6 bis 9, **dadurch gekennzeichnet, dass** das Druckmuster (410) einen Abdruck (440) umfasst, der aus zwei Ellipsen (442, 444) gebildet ist.

11. Vorrichtung nach Anspruch 10, **dadurch gekennzeichnet, dass** die Länge des Abdrucks (440) zwischen 250 und 350 mm liegt, vorzugsweise im Bereich von 300 mm, und seine Breite zwischen 100 und 180 mm.

12. Vorrichtung nach einem der Ansprüche 6 bis 11, **dadurch gekennzeichnet, dass** die Markierungsmittel zur Positionierung (400) einen mechanischen Anschlag (450) umfassen.

13. Vorrichtung nach Anspruch 12, **dadurch gekennzeichnet, dass** der mechanische Anschlag (450) angepasst ist, um als Anschlag für die Ferse eines Schuhs zu dienen.

14. Vorrichtung nach einem der Ansprüche 1 bis 13, **dadurch gekennzeichnet, dass** die Erkennungsmittel Senderwicklungen und Empfängerwicklungen (250, 260) umfassen, die für die Erkennung von metallischen Gegenständen angepasst sind.

15. Vorrichtung nach einem der Ansprüche 1 bis 14, **dadurch gekennzeichnet, dass** das Magnetfeld zur Erkennung auf optimale Weise gegenüber den Bereichen des Schuhs modelliert ist, die gewöhnlich die größte Menge Metall aufweisen.

16. Vorrichtung nach einem der Ansprüche 14 bis 15, **dadurch gekennzeichnet, dass** das Erkennungsfeld der Erkennungsmittel (250, 260) vorteilhafterweise in einem Abstand von der Ferse des Schuhs modelliert ist, der zwischen 10 und 20 cm, vorzugsweise im Bereich von 15 cm liegt.

17. Vorrichtung nach einem der Ansprüche 14 bis 16, **dadurch gekennzeichnet, dass** das Erkennungsmagnetfeld der Erkennungsmittel (250, 260) vorteilhafterweise in einem Abstand von einem mechanischen Anschlag (450) modelliert ist, der zwischen 10 und 20 cm, vorzugsweise im Bereich von 15 cm liegt.

18. Vorrichtung nach einem der Ansprüche 1 bis 17, **dadurch gekennzeichnet, dass** sie ein Mittel (300) umfasst, das visuelle und hörbare Meldungen liefert, die den Benutzer im Laufe der aufeinander folgenden Schritte der Erkennung leiten.

19. Vorrichtung nach einem der Ansprüche 1 bis 18, **dadurch gekennzeichnet, dass** sie Mittel (740) zur zufälligen Auswahl für die zufällige Bestimmung von Personen umfasst, die an einen oder mehrere zusätzliche(n) Test(s) verwiesen werden.

20. Vorrichtung nach einem der Ansprüche 1 bis 19, **dadurch gekennzeichnet, dass** sie Mittel (800) zur Entnehme von Dämpfen oder Spuren von Partikeln, z.B. von Betäubungsmitteln oder Explosionsmitteln, und zur Analyse dieser Dämpfe oder Spuren umfasst.

21. Vorrichtung nach Anspruch 20, **dadurch gekennzeichnet, dass** die Mittel zur Entnahme Ansaugdüsen (800) auf der Auflagefläche (100) umfassen.

22. Vorrichtung nach einem der Ansprüche 1 bis 21, **dadurch gekennzeichnet, dass** die vertikalen Tafeln (200) Ansaugdüsen (800) zur Entnahme von Dämpfen oder Spuren von Partikeln aufweisen.

23. Vorrichtung nach einem der Ansprüche 1 bis 22, **dadurch gekennzeichnet, dass** die Höhe der vertikalen Tafeln (200) an die Erkennung von Gegenständen bis zur Höhe des Knies einer kontrollierten Person angepasst ist.

24. Vorrichtung nach einem der Ansprüche 1 bis 23, **dadurch gekennzeichnet, dass** die Höhe der vertikalen Tafeln (200) zwischen 300 und 900 mm liegt.

25. Vorrichtung nach einem der Ansprüche 1 bis 24, **dadurch gekennzeichnet, dass** sie mehrere Wicklungen umfasst, die in der Höhe verschoben sind.

26. Vorrichtung nach einem der Ansprüche 1 bis 25, **dadurch gekennzeichnet, dass** sie mehrere Wicklungen umfasst, die horizontal verschoben sind.

27. Vorrichtung nach einem der Ansprüche 1 bis 26, **dadurch gekennzeichnet, dass** mindestens eine der vertikalen Tafeln Mittel (612) umfasst, die es ermöglichen, die Höhe der Erkennung eines nicht zulässigen Gegenstandes anzuzeigen.
